# FASCICULE DE BREVET EUROPEEN

(11) **EP 4 349 560 B1**
(45) Date de publication et mention de la délivrance du brevet: **24.07.2024**
(21) Numéro de dépôt: 23201473.8
(22) Date de dépôt: 03.10.2023
(51) Int. Cl.: B29C 43/34, B29C 51/26, B29C 43/36, B29C 31/00, B29C 70/54, B29C 51/00, B29C 51/08, B29K 101/12, B29K 105/08

(54) **SYSTÈME POUR L'ESTAMPAGE D'UN FLAN COMPOSITE THERMOPLASTIQUE ÉPAIS**
SYSTEM ZUM PRÄGEN EINES DICKEN THERMOPLASTISCHEN VERBUNDZUSCHNITTS
SYSTEM FOR STAMPING A THICK THERMOPLASTIC COMPOSITE BLANK

(30) Priorité: 05.10.2022 FR 2210167
(43) Date de publication de la demande: 10.04.2024
(73) Titulaire: Daher Aerospace, 94310 Orly (FR)
(72) Inventeur: ZAWADKA, Laurent, 44680 Sainte Pazanne (FR)
(74) Mandataire: Hamann, Jean-Christophe

(56) Documents cités:
- EP-B1- 3 065 931
- US-A- 2 700 179
- US-A- 3 476 377
- US-A1- 2017 001 383

## Description

### Domaine technique

L'invention concerne un système pour l'estampage de flans composites à matrice thermoplastique et fibres de renfort continues. Plus particulièrement, l'invention concerne la réalisation par estampage de pièces composites épaisses et relativement lourdes comprenant des surépaisseurs de renfort locales.

### Technique antérieure

L'estampage est une technique de formage pour la réalisation de pièces composites à matrice thermoplastique renforcées par des fibres continues, c'est-à-dire comprenant au moins une fibre de renfort s'étendant sans interruption d'une extrémité de la pièce à une autre extrémité de la pièce.

Le document EP 1 543 942 décrit un exemple de mise en oeuvre d'un procédé d'estampage adapté à la réalisation de pièces composites à matrice thermoplastique.

Un flan de forme appropriée est découpé dans une plaque composite consolidée ou partiellement consolidée, puis le flan est porté à une température de fusion du polymère composite en constituant la matrice, le flan ainsi déconsolidé est alors estampé entre un poinçon et une matrice d'estampage avant d'être refroidi et reconsolidé en forme entre ledit poinçon et ladite matrice d'estampage.

La difficulté de ce procédé réside dans la capacité de transférer le flan dans une zone de chauffage, puis une fois celui-ci porté à la température de fusion du polymère, alors que le flan ne présente que très peu de cohésion, à le transférer sur le poste d'estampage tout en assurant un positionnement précis dudit flan par rapport à l'outillage d'estampage.

Selon une technique de l'art antérieur, le flan est placé sur un film en polyimide résistant à la chaleur. Ce film polyimide sert de support au flan et à son transfert d'un poste de mise en oeuvre à l'autre.

Ainsi, ainsi dans un premier poste, le flan, posé sur le film, est chauffé, notamment par des panneaux radiants, afin de porter le polymère constituant la matrice dudit flan à une température égale ou supérieure à sa température de fusion.

À cette température, le flan est déconsolidé et ne présente qu'une très faible rigidité. Le polymère constituant la matrice étant dans un état liquide il ne s'oppose pas au déplacement relatif des fibres de renfort.

Le flan déconsolidé est amené au-dessus d'un outillage, en l'occurrence une matrice, puis le flan, toujours sur le film polyimide, est estampé par un poinçon poussant le flan et le film contre les parois de la matrice d'estampage.

Le flan et le film sont alors contenus dans un entrefer délimité par les parois de la matrice d'estampage et les parois du poinçon. Un cycle de refroidissement permet de reconsolider la pièce en forme alors que la maîtrise de l'entrefer assure la calibration de l'épaisseur de la pièce finie.

Ce procédé de l'art antérieur présente plusieurs inconvénients notamment celui du film polyimide qui est estampé en même temps que le flan et qui est susceptible de se froisser lors de cette opération. Les plis consécutifs à ce froissement s'impriment dans le polymère constituant la matrice de la pièce composite.

Un autre inconvénient de ce procédé est qu'il ne permet de localiser précisément le flan par rapport à l'outillage d'estampage (poinçon et matrice d'estampage) le flan étant simplement posé sur le film polyimide sans aucun moyen de mise en position.

Le document EP 3 065 931 décrit une amélioration du procédé présenté ci-dessus, dans lequel le flan est transporté du poste de chauffage au poste d'estampage sur un cadre de support, lequel cadre de support comprend des moyens pour positionner précisément le flan sur le cadre de support et des moyens pour positionner précisément le cadre de support par rapport à l'outillage d'estampage.

La recherche de réduction de masse, notamment dans le domaine aéronautique, conduit à la conception de pièces et notamment de pièces composites, intégrant toujours plus de fonctions sans assemblage.

Cela conduit à la réalisation de pièces de plus grandes dimensions, plus épaisses pour supporter des efforts plus importants, et comportant des renforts locaux pour améliorer la résistance à masse équivalente.

Les flans pour la réalisation de telles pièces atteignent 15 kg ou plus, avec des épaisseurs atteignant 15 mm ou plus.

De telles masses conduisent à des temps de chauffage nettement plus élevés pour obtenir la déconsolidation du flan, typiquement 20 minutes au lieu de 5 minutes maximum pour les flans des pièces redevables des procédés de l'art antérieur.

La combinaison d'un temps de chauffage important et la masse du flan à soutenir, ne permettent pas aux aménagements du cadre de transfert décrit dans EP 3 065 931 de jouer pleinement leur rôle.

### Résumé de l'invention

L'invention vise à résoudre les inconvénients de l'art antérieur et concerne à cette fin un système d'estampage comprenant :
- un flan détouré comprenant des fibres de renforts continues dans une matrice polymère thermoplastique ;
- un cadre de transfert apte à supporter le flan le long d'au moins deux bordures dudit flan et comprenant une zone ouverte entre ces bordures ;
- un dispositif d'estampage comprenant une matrice d'estampage et un poinçon mobile par rapport à la matrice d'estampage selon une position ouverte et une position fermée, la position fermée définissant un entrefer entre des parois de la matrice d'estampage et des parois du poinçon ;
- des moyens pour déplacer le cadre de transfert au-dessus de la matrice d'estampage dans une première position au-dessus d'une surface de pose de la matrice d'estampage et une deuxième position en dessous de la surface de pose et dans laquelle le flan repose sur la surface de pose de la matrice d'estampage ;
système dans lequel :
- le flan comprend sur une des au moins deux bordures au moins deux alésages de positionnement aptes à coopérer avec deux centreurs portés par le cadre de transfert ;
- le flan comporte deux lumières oblongues aptes à coopérer avec au moins deux doigts guides portés par la matrice ;
- le cadre de transfert comprend un élément support en forme de peigne comportant une pluralité de dents aptes à supporter le flan sur une surface de support le long d'une autre des au moins deux bordures dudit flan et des piges de maintien en protrusion et perpendiculaires à la surface de support à l'extrémité de dents de l'élément support en forme de peigne ;
- le flan comprend des lumières de maintien aptes à coopérer avec les piges de maintien de l'élément support en forme de peigne ;
- un périmètre de la matrice d'estampage dans un plan parallèle à la surface pose est contenu dans la zone ouverte du cadre de transfert ; et
- le cadre de transfert comporte des volets de protection thermique articulés, aptes à couvrir le flan et les centreurs au voisinage des alésages de positionnement lorsque le flan est posé sur le cadre de transfert.

Ainsi, le cadre de transfert définit une zone de positionnement précise du flan par l'intermédiaire des centreurs, zone qui est protégée par les volets de protection thermique et qui n'est pas déconsolidée lors du chauffage, alors que le support en forme peigne soutient le flan et évite son affaissement sous son propre poids lors des opérations de chauffage longues sans empêcher la déconsolidation du flan sur sa bordure en contact avec cet élément support.

L'invention est avantageusement mise en oeuvre selon les modes de réalisation et variantes exposées ci-après lesquels sont à considérer individuellement ou selon toute combinaison techniquement opérante.

Le système est plus particulièrement adapté dans le cas où une épaisseur du flan est égale ou supérieure à 10 mm.

Selon un mode réalisation, le flan comprend des variations d'épaisseur. Les moyens de positionnement permettent de positionner parfaitement ces variations d'épaisseur relativement à la matrice d'estampage et au poinçon.

Selon un mode de réalisation la masse du flan est supérieure à 5 kg. En effet, le système objet de l'invention est adapté à tout type de flan destiné à l'estampage mais est particulièrement avantageux dans le cas de flans lourds et épais.

En combinant des épaisseurs élevées (supérieures à 10 mm) et des variations d'épaisseur, le système objet de l'invention es particulièrement adapté à la réalisation de pièces composite intégrant de nombreuses fonctions et permet de réduire la masse de ces pièces ainsi que les temps de fabrication notamment en évitant des assemblages.

Selon un mode de réalisation avantageux, le flan comprend deux paires d'alésages de positionnement, coopérant avec 2 paires de centreurs et dans lequel les lumières oblongues sont situées entre deux alésages de positionnement dans chaque paire d'alésages de positionnement, les volets de protection thermique étant configurés de sorte à être poussés et éloignés du flan par l'action des doigts guides fixés à la matrice d'estampage, à travers les lumières oblongues, lorsque le cadre de transfert passe de la première position à la deuxième position relativement à la matrice d'estampage.

Avantageusement, le cadre de transfert est constitué d'un assemblage de profilés métalliques et comprend un rail apte à recevoir des taquets réglables en position sur ledit rail, chaque taquet comprend une surface d'appui et les deux centreurs aptes à être introduits dans les alésages de positionnement du flan. Ainsi, le système est modulaire et adaptable à un grand nombre de flans de dimensions diverses.

Avantageusement, chaque taquet comprend une plaquette d'une épaisseur sensiblement égale à l'épaisseur du flan apte à protéger thermiquement un chan du flan au niveau du taquet lorsque le flan est posé sur le cadre de transfert.

### Brève description des dessins

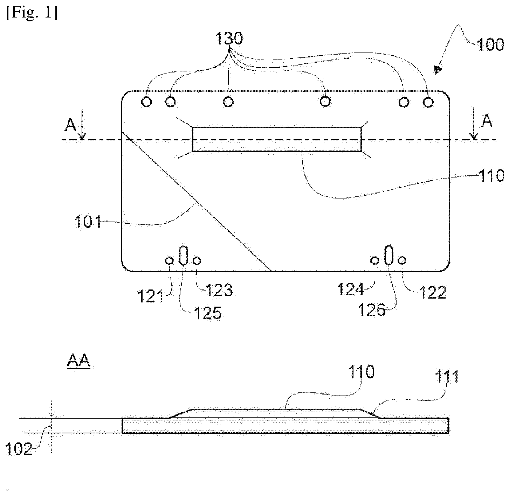

L'invention est mise en oeuvre selon ses modes de réalisation préférés, nullement limitatifs, exposés ci-après en référence aux figures 1 à 8 dans lesquelles :
**Fig.1**
   [Fig.1] montre selon une vue de dessus et une vue en coupe AA définie sur cette même figure un exemple de réalisation d'un flan comprenant une variation d'épaisseur ;
**Fig.2**

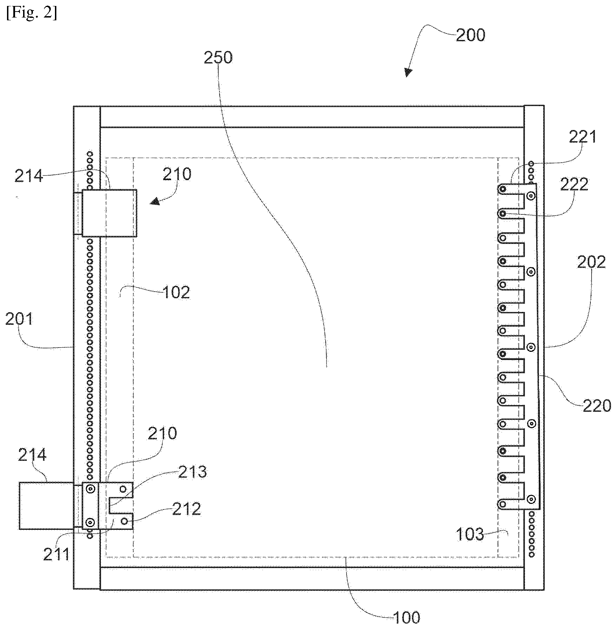

   [Fig.2] représente en vue de dessus un exemple de réalisation simplifiée du cadre de transfert et comment le flan se positionne sur ledit cadre ;
**Fig.3**

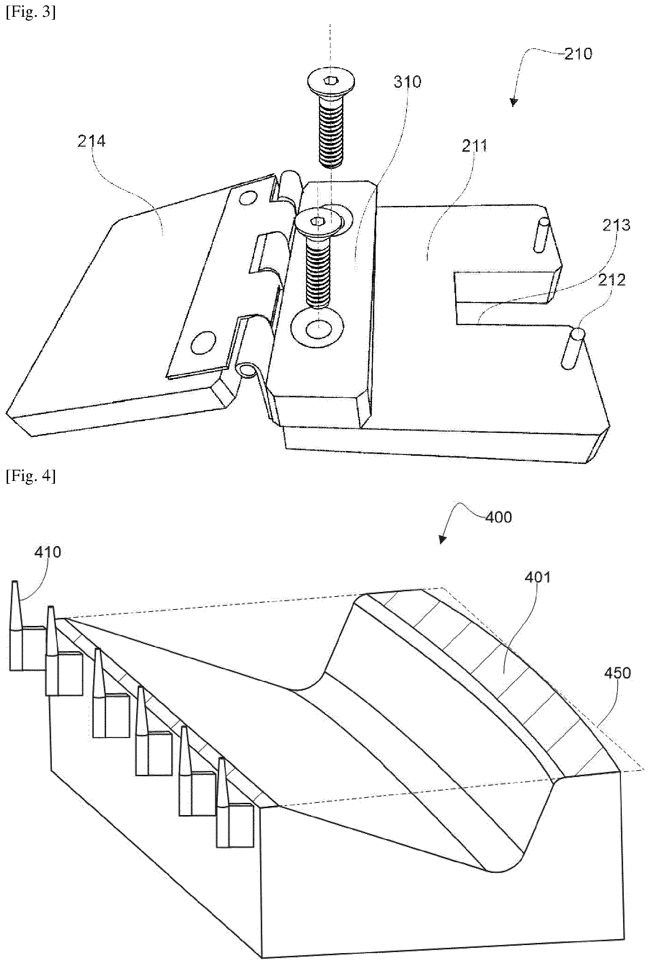

   [Fig.3] est une vue en perspective d'un exemple de réalisation d'un taquet ;
**Fig.4**
   [Fig.4] est une vue en perspective d'un exemple de réalisation d'une matrice d'estampage ;
**Fig.5**

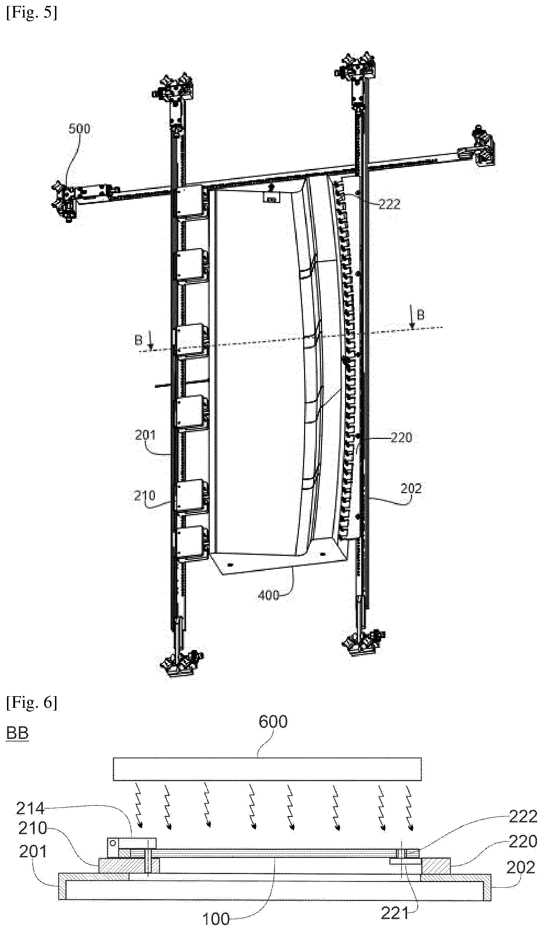

   [Fig.5]] montre en vue de dessus un exemple de réalisation montrant un cadre de transfert adapté à la matrice de [Fig.4]
**Fig.6**
   [Fig.6] est une vue en coupe BB définie [Fig.5] de la mise en oeuvre du système de l'invention au cours d'une étape de chauffage du flan ;
**Fig.7**

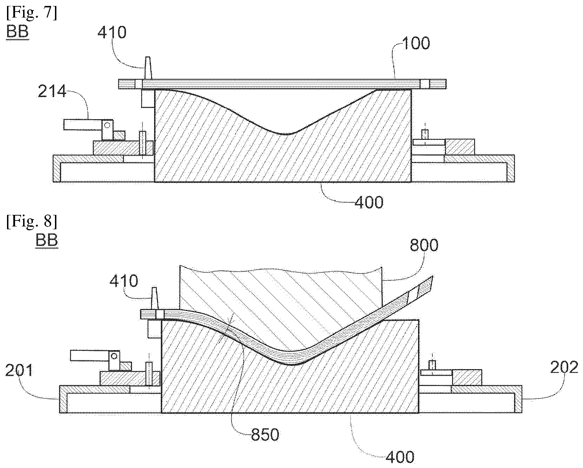

   [Fig.7] montre selon la même coupe BB une étape de transfert du flan, du cadre de transfert à la matrice d'estampage ;
**Fig.8**
   [Fig.8] représente selon la même coupe BB la mise en oeuvre du dispositif de l'invention au cours de l'étape d'estampage.

### Description des modes de réalisation

[Fig.1] selon un exemple réalisation le système objet de l'invention comprend un flan (100) destiné à être formé par estampage. Selon cet exemple de réalisation le flan est détouré selon un contour rectangulaire mais en pratique celui-ci est détouré selon un contour adapté à a forme de la pièce finale à obtenir.

Le flan (100) est un stratifié de plis composites, une partie ou la totalité des plis comprenant des fibres continues (101) s'étendant sans discontinuité d'un bord à l'autre du contour du flan.

Les fibres continues sont comprises dans des plis unidirectionnels déposés par placement de fibres, drapage de lais de fibres unidirectionnelles non-tissés ou de tissus dits unidirectionnels, ou dans des plis de tissu.

La séquence de stratification et d'orientation des fibres dans les plis dépend de l'application.

Le flan (100) est découpé dans une plaque préconsolidée comprenant une matrice polymère thermoplastique et obtenue par exemple au moyen des procédés décrits dans les documents EP 2 819 823 ou EP 2 064 050.

Alternativement, le flan est obtenu à partir d'une ébauche partiellement consolidée, obtenue par placement de fibres tel que décrit dans les documents US 2018/319102 ou US 10 016 931.

Le détourage est réalisé par jet d'eau abrasif à haute pression, par outil coupant en fraisage ou par toute autre technique connue de l'art antérieur.

L'épaisseur (102) du flan est typiquement supérieure ou égale à 10 mm et selon un exemple de réalisation, le flan comprend une ou plusieurs zones de renfort (110) d'épaisseur supérieure et comprenant une épaisseur dégressive sur les bords du renfort sous forme de lâcher de plis (111), de sorte que le flan comprend des variations d'épaisseur.

Typiquement, le flan (100) a une masse de 5 kg ou supérieure.

Le flan comprend au moins deux alésages de positionnement (121, 122) aptes à coopérer avec des centreurs comme exposé plus loin.

Avantageusement, les alésages de positionnement sont organisés par paires (121, 123 ; 122, 124), et une lumière oblongue (125, 126) est réalisée entre chaque paire.

Ces aménagements, alésages de positionnement (121, 122, 123, 124) et lumières oblongues (125, 126) sont réalisés en bordure du flan.

Sur une bordure opposée auxdits aménagements, le flan comprend des lumières de maintien (130) aptes à coopérer avec des piges de maintien tel qu'exposé plus loin.

Les lumières et les alésages de positionnement sont obtenus par perçage, fraisage, détourage au jet d'eau abrasif ou toutes autres techniques adaptées.

[Fig.2] Le système objet de l'invention comprend un cadre de transfert (200) apte à supporter le flan entre les postes réalisant les différentes étapes d'un procédé d'estampage.

Selon un exemple de réalisation, le cadre de transfert est constitué d'un assemblage de profilés métalliques, par exemple des cornières.

Au moins un des profilés est un rail (201) apte à recevoir des taquets (210) réglables en position sur ledit rail.

Chaque taquet (210) comprend une surface d'appui (211), au moins un centreur (212) et préférentiellement deux centreurs aptes à être introduits dans les alésages de positionnement du flan.

Le taquet (210) comporte, selon ce mode de réalisation, une encoche (213) dans la surface d'appui (211) de sorte que la lumière oblongue du flan ne soit pas couverte par ladite surface d'appui lorsque le flan est posé sur le cadre de transfert.

Chaque taquet comprend un volet de protection thermique (214) articulé par rapport à la partie réalisant la surface d'appui du taquet, de sorte que ledit volet de protection thermique (214) puisse, dans une position fermée, recouvrir une zone du flan sur une surface sensiblement égale à la surface d'appui.

[Fig.2] représente un taquet où le volet de protection thermique est dans une position ouverte et un taquet où le volet de protection thermique (214) est dans une position fermée, recouvrant alors une zone du flan et les centreurs dans cette zone.

Le cadre de transfert comprend au moins un élément support en forme de peigne (220) fixé à un rail (202) sur un côté opposé au rail (201) supportant des taquets.

L'élément support en forme de peigne (220) comprend une pluralité de dents (221) certaines de ces dents portant une pige de maintien (222).

[Fig.2] toutes les dents (221) de l'élément support en forme de peigne sont de mêmes longueurs mais, selon d'autres modes de réalisation, les dents du peigne peuvent être de longueurs différentes pour être adaptées au contour du flan.

Le flan (100) dont la position est représentée en traits mixtes [Fig.2] repose sur le cadre de transfert (200) par ses bordures (102, 103), sur les surfaces d'appui (211) des taquets et sur une surface de support constituée par les dents (221) de l'élément support en forme de peigne (220), alors que les aménagements décrits plus haut, alésages de positionnement et lumières de maintien, coopèrent respectivement avec les centreurs (212) des taquets et les piges de maintien (222) installées sur certaines dents (221) de l'élément support en forme de peigne (220).

[Fig.2] le flan est représenté reposant sur le cadre de transfert (200) sur deux de ses bordures (102, 103), selon l'application et la forme du flan, celui-ci peut reposer sur le cadre de transfert sur plusieurs de ses bordures, et ledit cadre de transfert peut comporter plus de deux rails aptes à supporter des taquets ou un élément support en forme de peigne.

Les taquets et les moyens qu'ils portent assurent le positionnement précis du flan par rapport au cadre puis par rapport à l'outillage d'estampage comme expliqué plus loin.

L'élément support en forme de peigne assure le support du flan sans fonction de positionnement. Aussi, le diamètre des piges de maintien est inférieur au diamètre des lumières de maintien du flan, pour éviter tout hyperstatisme de positionnement du flan sur le cadre.

Les dents de l'élément support en forme de peigne ainsi que les surfaces d'appui des taquets s'étendent sensiblement perpendiculairement aux rails constituant le cadre de transfert vers l'intérieur dudit cadre.

Ainsi, lorsqu'un flan n'est pas posé sur le cadre de transfert, ledit cadre délimite une zone ouverte (250) exempte de tout obstacle.

[Fig.3] selon un exemple de réalisation le taquet est constitué d'acier épais, typiquement de l'ordre de 15 mm, d'une nuance sélectionnée de sorte que celui-ci reste stable lors du chauffage du flan et constitue un puits thermique maintenant le flan à une température inférieure à la température de fusion du polymère en constituant la matrice, durant le chauffage et dans la zone d'appui du flan sur le taquet.

Le volet de protection thermique (214), en acier d'une épaisseur de l'ordre de 10 mm agit comme un écran thermique de cette zone durant le chauffage préalable à l'estampage du flan.

Selon cet exemple de réalisation une plaquette (310), d'une épaisseur sensiblement égale à l'épaisseur du flan permet la fixation du taquet sur le rail du cadre de transfert à un emplacement défini. La plaquette (310) protège le chan du flan au niveau du taquet du rayonnement thermique des moyens de chauffage de sorte à assurer que la zone couverte par le volet de protection thermique ne soit pas déconsolidée.

L'élément support en forme de peigne est réalisé en acier d'une épaisseur inférieure à celle du taquet, de l'ordre de 4 mm. L'élément de support en forme de peigne agit comme support, mais à la différence du taquet, n'a pas de fonction de puits thermique. Le contact du flan sur l'élément support en forme de peigne est réduit à la surface de contact avec les dents de celui-ci, afin de minimiser la transmission thermique par conduction au cours du chauffage du flan et assurer que la température du flan atteigne bien la température de fusion au cours du chauffage dans la bordure en contact avec l'élément de support en forme de peigne.

[Fig.4] la matrice d'estampage de l'outillage d'estampage comprend une surface de pose (401), hachurée sur la figure, et sur laquelle le flan repose avant l'action du poinçon et le formage par estampage.

Au niveau de la surface de pose (401) et sous cette surface, la matrice d'estampage est comprise dans un périmètre (450).

En revenant à la [Fig.2] les profilés constituant le cadre de transfert sont ajustés, en fonction des caractéristiques de l'outillage mettant en oeuvre l'opération d'estampage de sorte que le périmètre de la matrice d'estampage puisse être compris dans la zone ouverte (250) exempte de tout obstacle et délimitée par le cadre de transfert.

La matrice d'estampage comporte à l'extérieur de ce périmètre une pluralité de doigts guides (410), sous forme, par exemple, de piges coniques, et fixés sur une des faces extérieures de la matrice d'estampage (400).

La [Fig.5] montre le positionnement du cadre par rapport à la matrice d'estampage juste avant le début de l'estampage.

Le cadre transfert comprend des moyens (500) pour le connecter à des systèmes de guidage et de déplacement de sorte à le déplacer d'un poste à l'autre au cours de l'opération de formage par estampage.

[Fig.6] le flan (100) étant installé sur le cadre de transfert et les volets de protection thermique (214) refermés au-dessus des taquets (210), le cadre de transfert est amené sous un dispositif de chauffage (600), par exemple des panneaux rayonnants.

Ce dispositif de chauffage porte le flan (100) à une température au moins égale et préférentiellement supérieure de 5 °C à 10 °C à la température de fusion du polymère thermoplastique constituant la matrice du composite.

À cette température le polymère est dans un état pâteux, le flan est déconsolidé et ne présente qu'une faible cohésion.

L'opération de chauffage, compte tenu de l'épaisseur et de la masse du flan peut durer plusieurs dizaines de minutes. Tout le volume du flan est porté à cette température sauf les zones situées au niveau des taquets (210), qui elles, restent à une température inférieure à cette température de fusion, du fait de l'effet de puits thermique des taquets (210) et de l'écran au rayonnement créé par les volets de protection thermique (214). Ainsi, ces zones ne sont pas déconsolidées et constituent des accroches solides du flan au cadre de transfert.

L'effet de puits thermique de l'élément support en forme de peigne (220) est réduit comparativement à celui produit par les taquets (210) du fait de la zone de contact réduite avec les dents. Ainsi, la bordure du flan en contact avec l'élément de support en forme de peigne est également portée à la température de fusion du polymère lors du chauffage et se déconsolide.

Cependant, le support apporter par les dents (221) et les piges de maintien (222), combinées à l'accroche au niveau des taquets, permettent de maintenir le flan sur le cadre de transfert bien que ledit flan soit déconsolidé et ait tendance à s'affaisser sous son propre poids.

L'ensemble flan (100) déconsolidé et cadre de transfert est transporté au-dessus de la matrice d'estampage (400), dans une position correspondant à la [Fig.5].

[Fig.7] le cadre de transfert est escamoté en le faisant descendre le long de la matrice qui pénètre dans la zone d'ouverture du cadre. Ce faisant, le flan (100) est posé sur la surface de pose de la matrice d'estampage (400).

Dans ce mouvement, le flan (100) est libéré du support en forme de peigne et des piges de maintien.

Les doigts guides (410) fixés à la matrice d'estampage, pénètrent dans les lumières oblongues du flan, lesdites lumières oblongues étant situées dans les zones non déconsolidées du flan et découvertes par les encoches des taquets.

En pénétrant dans les lumières oblongues les doigts guides (410) poussent les volets de protection thermique (214) en les soulevant pour éviter toute interférence avec le flan lors de son estampage, .

Les doigts guides étant de forme conique ils réalisent un guidage avec un faible jeu dans la largeur des lumières oblongues lorsque le flan est posé sur la surface de pose de la matrice.

[Fig.8] le flan est estampé par rapprochement du poinçon (800) de la matrice d'estampage (400). Les fibres continues renforçant le flan n'étant pas aptes à se déformer plastiquement, le formage se produit par glissement interlaminaire des plis constituant le composite.

Ce glissement interlaminaire ne se produit pas dans les zones qui ne sont pas déconsolidées, c'est-à-dire les zones qui se trouvaient sur les taquets et sous les volets de protection thermique au moment du chauffage du flan. Cependant, les doigts guides se trouvant dans des lumières oblongues, celles-ci ne s'opposent pas au glissement du flan sur la surface de pose de la matrice d'estampage.

Ainsi, le glissement interlaminaire est visible, dans cet exemple, sur le bord du flan qui était supporté par l'élément support en forme de peigne et qui, lui, a été porté à la température de fusion du polymère constituant la matrice du composite.

Le flan est reconsolidé au cours d'un refroidissement et son épaisseur calibrée par l'épaisseur de l'entrefer (850) entre le poinçon (800) et la matrice d'estampage (400).

Le poinçon peut alors être écarté de la matrice d'estampage et l'ébauche estampée démoulée. Cette ébauche subit ensuite un détourage et diverses opérations de finition pour constituer une pièce.

En revenant à la [Fig.1], lorsque la pièce finale, et donc le flan, comporte des variations d'épaisseur, par exemple sous la forme de renforts (110) locaux, il est important que ces zones de renforts soient correctement positionnées vis-à-vis de la matrice d'estampage et du poinçon lors de l'opération d'estampage.

Les alésages de positionnement (121, 122, 123, 124) du flan, coopérant avec les centreurs des taquets, permettent un positionnement précis des zones de renforts du flan par rapport au cadre de transfert. Les zones du flan reposant sur les taquets n'étant pas portées à la température de fusion du polymère constituant la matrice du composite lors de l'étape de chauffage, et par conséquent n'étant pas déconsolidée, ce positionnement est conservé jusqu'à ce que le flan soit libéré du cadre de transfert et posé sur la surface de pose de la matrice d'estampage.

Lorsque le flan est transféré sur la surface de pose de la matrice d'estampage, les doigts guides attachés à cette matrice d'estampage, assurent le positionnement précis du flan relativement à la matrice d'estampage, en coopérant avec les lumières oblongues (125, 126) du flan qui sont également dans une zone non déconsolidée du flan.

Ainsi, les éventuelles zones de variation d'épaisseur du flan restent parfaitement positionnées lors de l'installation du flan sur le cadre de transfert, lors de l'étape de chauffage et lors du transfert du flan du cadre de transfert sur la matrice d'estampage, puis lors de l'estampage.

## Revendications

1. Système d'estampage comprenant :
- un flan (100) détouré comprenant des fibres de renforts continues (101) dans une matrice polymère thermoplastique ;
- un cadre de transfert (200) apte à supporter le flan le long d'au moins deux bordures (102, 103) dudit flan et comprenant une zone ouverte (250) entre ces bordures ;
- un dispositif d'estampage comprenant une matrice d'estampage (400) et un poinçon (800) mobile par rapport à la matrice d'estampage selon une position ouverte et une position fermée, la position fermée définissant un entrefer (850) entre des parois de la matrice d'estampage et des parois du poinçon ;
- des moyens pour déplacer le cadre de transfert au-dessus de la matrice d'estampage (400) dans une première position au-dessus d'une surface de pose (401) de la matrice d'estampage et une deuxième position en dessous de la surface de pose (401) et dans laquelle le flan repose sur la surface de pose de la matrice d'estampage ;
système dans lequel :
- le flan (100) comprend sur une des au moins deux bordures (102, 103) au moins deux alésages (121, 122) de positionnement aptes à coopérer avec deux centreurs (212) portés par le cadre de transfert (200) ;
- le flan comporte deux lumières oblongues (125, 126) aptes à coopérer avec au moins deux doigts guides (410) portés par la matrice ;
- le cadre de transfert (200) comprend un élément support en forme de peigne (220) comportant une pluralité de dents (221) aptes à supporter le flan (100) sur une surface de support le long d'une autre des au moins deux bordures (102,103) dudit flan et des piges de maintien (222) en protrusion et perpendiculaires à la surface de support à l'extrémité de dents (221) de l'élément support en forme de peigne (220) ;
- le flan comprend des lumières de maintien (130) aptes à coopérer avec les piges de maintien (222) de l'élément support en forme de peigne (220) ;
- un périmètre (450) de la matrice d'estampage dans un plan parallèle à la surface pose (401) est contenu dans la zone ouverte (250) du cadre de transfert ; et
- le cadre de transfert (200) comporte des volets de protection thermique (214) articulés, aptes à couvrir le flan et les centreurs (212) au voisinage des alésages de positionnement (121, 122, 123, 124) lorsque le flan est posé sur le cadre de transfert (200).

2. Système d'estampage selon la revendication 1, dans lequel une épaisseur du flan est égale ou supérieure à 10 mm.

3. Système d'estampage selon la revendication 1, dans lequel le flan comprend des variations d'épaisseur.

4. Système d'estampage selon la revendication 1, dans lequel la masse du fan (100) est supérieure à 5 kg.

5. Système d'estampage selon la revendication 1, dans lequel le flan comprend deux paires d'alésages de positionnement (121,123,122, 124), coopérant avec 2 paires de centreurs (212) et dans lequel les lumières oblongues (125, 126) sont situées entre deux alésages de positionnement dans chaque paire d'alésages de positionnement, les volets de protection thermique (214) étant configurés de sorte à être poussés et éloignés du flan par l'action des doigts guides (410) fixés à la matrice d'estampage, à travers les lumières oblongues, lorsque le cadre de transfert passe de la première position à la deuxième position relativement à la matrice d'estampage.

6. Système selon la revendication 1, dans lequel le cadre de transfert est constitué d'un assemblage de profilés métalliques et comprend un rail (201) apte à recevoir des taquets (210) réglables en position sur ledit rail chaque taquet (210) comprend une surface d'appui (211), et les deux centreurs (212) aptes à être introduits dans les alésages de positionnement du flan.

7. Système selon la revendication 6, dans lequel chaque taquet (210) comprend une plaquette (310) d'une épaisseur sensiblement égale à l'épaisseur du flan apte à protéger thermiquement un chan du flan au niveau du taquet lorsque le flan est posé sur le cadre de transfert.

## Patentansprüche

1. Ein Stanzsystem, das Folgendes umfasst: - einen beschnittenen Rohling (100), der kontinuierliche Verstärkungsfasern (101) in einer thermoplastischen Polymermatrix umfasst;
- einen Transferrahmen (200), der so konfiguriert ist, dass er den Rohling entlang mindestens zweier Kanten (102, 103) des Rohlings hält und einen offenen Bereich zwischen diesen Kanten umfasst;
- eine Stanzvorrichtung, die eine Stanzform (400) und einen Stempel (800) umfasst, der in Bezug auf die Stanzform zwischen einer offenen Position und einer geschlossenen Position beweglich ist, wobei die geschlossene Position einen Luftspalt (850) zwischen den Wänden der Stanzform und den Wänden des Stempels definiert;
- Mittel zum Bewegen des Transferrahmens oberhalb des Stanzstempels (400) in eine erste Position oberhalb einer Ruhefläche (401) des Stanzstempels und eine zweite Position unterhalb der Ruhefläche (401), wobei der Rohling auf der Ruhefläche des Stanzstempels ruht; wobei:
- der Rohling (100) an einem der mindestens zwei Ränder (102, 103) mindestens zwei Positionierbohrungen (121, 122) aufweist, die so gestaltet sind, dass sie mit zwei Zentrierstiften (212) zusammenwirken, die von dem Transferrahmen (200) getragen werden;
- der Zuschnitt zwei längliche Schlitze (125. 126), die so gestaltet sind, dass sie mit mindestens zwei von der Matrize getragenen Führungsstiften (410) zusammenwirken;
- der Transferrahmen (200) umfasst ein kammförmiges Stützelement (220), das eine Vielzahl von Zähnen (221) umfasst, die so gestaltet sind, dass sie den Rohling auf einer Haltefläche abstützen, die sich entlang einer anderen der mindestens zwei Kanten (102, 103) des Rohlings erstreckt, und Haltezapfen (222), die von den Enden der Zähne (221) des kammförmigen Stützelements und senkrecht zur Haltefläche vorstehen; der Rohling Halteschlitze umfasst, die so konfiguriert sind, dass sie mit den Haltestiften des kammförmigen Trägerelements zusammenwirken;
- ein Umfang (450) des Stanzwerkzeugs in einer Ebene parallel zur Auflagefläche (401) in dem offenen Bereich (250) des Transferrahmens enthalten ist; und
- der Transferrahmen (200) aufklappbare Wärmeschutzklappen (214) umfasst, die so konfiguriert sind, dass sie den Rohling und die Zentrierstifte (212) in der Nähe der Positionierungsbohrungen (121, 122, 123, 124) abdecken, wenn der Rohling auf den Transferrahmen (200) gelegt wird.

2. Das Stanzsystem nach Anspruch 1, wobei die Dicke des Rohlings gleich oder größer als 10 mm ist.

3. Das Stanzsystem nach Anspruch 1, wobei der Rohling Dickenschwankungen aufweist.

4. Das Stanzsystem nach Anspruch 1, wobei die Masse des Rohlings (100) größer als 5 kg ist.

5. Stanzsystem nach Anspruch 1, wobei der Rohling zwei Paare von Positionierungsbohrungen (121, 123, 122, 124) aufweist, die mit zwei Paaren von Zentrierstiften (212) zusammenwirken, und wobei die Langlöcher (125, 126) zwischen zwei Positionierungsbohrungen in jedem Paar von Positionierungsbohrungen angeordnet sind, wobei die Wärmeschutzklappen (214) so konfiguriert sind, dass sie durch die Wirkung der an der Stanzform angebrachten Führungsstifte (410) durch die Langlöcher von dem Rohling weggedrückt werden, wenn sich der Transferrahmen von der ersten Position in die zweite Position relativ zu der Stanzform bewegt.

6. Stanzsystem nach Anspruch 1, wobei der Transferrahmen aus einer Anordnung von Metallprofilen aufgebaut ist und eine Schiene (201) umfasst, die so konfiguriert ist, dass sie Stollen (210) hält, die in ihrer Position auf der Schiene einstellbar sind, wobei jeder Stollen (210) eine Auflagefläche (211) und zwei Zentrierstifte (210) umfasst, die so konfiguriert sind, dass sie in die Positionierungsbohrungen des Rohlings eingesetzt werden.

7. Stanzsystem nach Anspruch 6, bei dem jede Leiste (210) ein Plättchen (310) mit einer Dicke umfasst, die im Wesentlichen der Dicke des Rohlings entspricht und in der Lage ist, eine Kante des Rohlings auf der Höhe der Leiste thermisch zu schützen, wenn der Rohling auf den Transferrahmen gelegt wird.

## Claims

1. A stamping system comprising: - a trimmed blank (100) comprising continuous reinforcing fibers (101) in a thermoplastic polymer matrix;
- a transfer frame (200) configured to hold the blank along at least two edgings (102, 103) of said blank and comprising an open area between these edgings;
- a stamping device comprising a stamping die (400) and a punch (800) movable with respect to the stamping die between an open position and a closed position, the closed position defining an air gap (850) between walls of the stamping die and walls of the punch;
- means for moving the transfer frame above the stamping die (400) to a first position above a resting surface (401) of the stamping die and a second position below the resting surface (401) and wherein the blank rests on the resting surface of the stamping die; wherein:
- the blank (100) comprises on one of the at the least two edgings (102, 103) at least two positioning bore holes (121, 122) configured to cooperate with two centering pins (212) carried by the transfer frame (200);
- the blank comprises two oblong slots (125. 126) configured to cooperate with at least two guiding pins (410) carried by the die;
- the transfer frame (200) comprises a comb-shaped support member (220) comprising a plurality of teeth (221) configured to support the blank on a holding surface extending along another of the at least two edgings (102, 103) of the blank and holding pegs (222) protruding from ends of the teeth (221) of the comb-shaped support member and perpendicular to the holding surface;
- the blank comprises holding slots configured to cooperate with the holding pegs of the comb-shaped support member;
- a perimeter (450) of the stamping die in a plane parallel to the resting surface (401) is contained in the open area (250) of the transfer frame; and
- the transfer frame (200) comprises thermal protection hinged flaps (214), configured to cover the blank and the centering pins (212) in the vicinity of the positioning bore holes (121, 122, 123, 124) when the blank is laid on the transfer frame (200).

2. The stamping system of claim 1, wherein a thickness of the blank is equal to or greater than 10 mm.

3. The stamping system of claim 1, wherein the blank includes thickness variations.

4. The stamping system of claim 1, wherein the mass of the blank (100) is greater than 5 kg.

5. The stamping system of claim 1. wherein the blank comprises two pairs of positioning bore holes (121,123,122, 124), cooperating with 2 pairs of centering pins (212) and wherein the oblong slots (125. 126) are located inbetween two positioning bore holes in each pair of positioning bore holes, the thermal protection flaps (214) being configured to be pushed away from the blank by the action of the guiding pins (410) attached to the stamping die, through the oblong slots, when the transfer frame moves from the first position to the second position relative to the stamping die.

6. The stamping system of claim 1. wherein the transfer frame is built of an assembly of metal profiles and comprises a rail (201) configured to hold cleats (210) adjustable in position on said rail, each cleat (210) comprising a bearing surface (211) and two centering pins (210) configured for being inserted into the positioning bore holes of the blank.

7. The stamping system of claim 6, wherein each cleat (210) comprises a platelet (310) with a thickness substantially equal to the thickness of the blank capable of thermally protecting an edging of the blank at the level of the cleat when the blank is laid on the transfer frame.
